# EUROPEAN PATENT APPLICATION

(11) **EP 4 700 339 A1**
(43) Date of publication of application: **25.02.2026**
(21) Application number: 23934080.5
(22) Date of filing: 20.04.2023
(51) Int. Cl.: G01G 19/387

(54) **WATERPROOF STRUCTURE OF COMBINATION WEIGHING DEVICE**

(71) Applicant: Yamato Scale Co., Ltd., Akashi-shi, Hyogo 673-0849 (JP)
(72) Inventor: SUEMICHI, Ryo, Akashi-shi, Hyogo 673-0849 (JP); NAGAI, Takayuki, Akashi-shi, Hyogo 673-0849 (JP)
(74) Representative: Ter Meer Steinmeister & Partner
(86) International application number: PCT/JP2023/015757
(87) International publication number: WO 2024/218935

(57) **Abstract**

The combination weighing apparatus disclosed herein includes a center base substrate, unit cases, and cover cases. The unit cases each have a flange on an outer circumferential part of an opening formed therein. This flange is allowed to abut the outer circumferential surface of the center base substrate. The cover cases each have a flange on an outer circumferential part of an opening formed therein. This flange is adapted to cover the flange of the unit case with a void being present therebetween. A packing member is interposed between the flanges of the unit case and of the cover case. The center base substrate has, on its outer circumferential surface, blocking protrusions each protruding into between the packing member and the flange of the cover case in the void.

## Description

### TECHNICAL FIELD

This disclosure relates to a combination weighing apparatus operable to weigh and discharge a predetermined amount of articles, for example, foodstuffs, more particularly to a waterproof structure developed for such a combination weighing apparatus.

### BACKGROUND ART

In the combination weighing apparatuses, the apparatus may be conventionally equipped with a base disposed at the upper center of the apparatus, a dispersing feeder, and a plurality of linear feeders that are disposed upward of the base. The apparatus may be further equipped with a plurality of feeding hoppers and weighing hoppers. The feeding hoppers and the weighing hoppers are removably attached to the outer circumference of the base. The dispersing feeder radially disperses and transports articles thrown down from the upper side of the apparatus. The linear feeders receive the articles thus dispersed by and transported from the dispersing feeder. The linear feeders then transport the received articles further outward. The feeding hoppers receive the articles from the linear feeders and temporarily retain. The feeding hoppers then discharge the articles into the weighing hoppers. The weighing hoppers receive and weigh the articles discharged from the feeding hoppers.

The combination weighing apparatus thus structured may execute combinatorial computations based on the weights of the articles measured by the weighing hoppers and then select a combination of weighing hoppers that stays within a predetermined range of weights. Then, the apparatus opens the gates of the selected weighing hoppers to discharge the articles into a collection chute, guiding the collected articles along the collection chute into a packaging apparatus disposed down below.

The combination weighing apparatuses used to weigh foodstuffs need to be cleaned often for hygienic purposes. The combination weighing apparatus described in the patent literature 1 has, in a base disposed to support a base substrate at the center, an opening for maintenance which is closable with a cover plate. For protection of the electric system embedded in the base, this opening is subjected to a waterproofing treatment to prevent cleaning water from penetrating into the base during cleaning.

### CITATION LIST

### PATENT LITERATURE

Patent literature 1: JP 2011-163957 A

### SUMMARY OF THE INVENTION

### TECHNICAL PROBLEMS

In the combination weighing apparatuses, devices and components mounted to a center base substrate, other than the base opening, may have to be waterproofed as well, for example, the dispersion feeder's top cone, trough-attached portions of the linear feeders, and/or portions of driver units to which the feeding hoppers and weighing hoppers are attachable.

Besides, any combination weighing apparatuses used to weigh foodstuffs should desirably be equipped to prevent the risk of bacteria propagation in addition to waterproofness for cleaning.

To address these issues of the known art, this disclosure is directed to providing a waterproof structure for the combination weighing apparatuses that excels in waterproofness and also in preventability of possible bacteria propagation.

### SOLUTIONS TO THE PROBLEMS

To this end, this disclosure provides the following technical features.

1] This disclosure provides a waterproof structure for a combination weighing apparatus, the combination weighing apparatus, comprising:
   a center base substrate having a plurality of openings;
   a plurality of hoppers; and
   a plurality of driver units each having a cabinet, the plurality of hoppers each being attachable to a respective one of the plurality of driver units,
   the cabinets of the plurality of driver units being mountable to the plurality of openings of the center base substrate in a manner that the plurality of openings are closable with the cabinets,
   the plurality of driver units being allowed to open and close the gates of the plurality of hoppers,
   the cabinets of the plurality of driver units each comprising a unit case, and a cover case,
   the unit cases each including a metallic material and having an opening formed correspondingly to a respective one of the openings of the center base substrate,
   the cover cases each including a metallic material and having an opening, the cover cases serving to cover the unit cases,
   the cover cases each comprising a flange that covers the flange of the unit case, with a void being present therebetween, from an outer circumferential side of the flange, the flanges of the cover cases being annularly disposed circumferentially along the openings,
   packing members each being interposed between the flange of the unit case and the flange of the cover case,
   the center base substrate comprising blocking protrusions on an outer circumferential surface thereof, the blocking protrusions each protruding into between the packing member and the flange of the cover case in the void.

In the waterproof structure for the combination weighing apparatus disclosed herein, a packing member is fitted into between the flanges of the unit case and of the cover case. This packing member may serve to seal any possible gap or void between the unit case and the cover case that covers the unit case. As a result, cleaning water or foodstuff residues, if any, may be unlikely to penetrate into the void or gap, and the risk of bacteria propagation in the void or gap may be successfully avoidable.

During cleaning using high-pressure cleaning water, the blocking protrusion may block the high-pressure cleaning water blown into the flange through between the outer circumferential surface of the center base substrate and the front edge of the flange of the cover case. This may prevent direct contact of the high-pressure cleaning water with the packing member interposed between the flanges of the unit case and of the cover case, avoiding the risk of any damage by the high-pressure cleaning water to the packing member made of, for example, rubber.

Possibly, cleaning water may penetrate into the cover case through between the center base substrate and the cover case's flange. This embodiment, however, may allow the cleaning eater to be discharged through an annular void or gap formed between the flange of the cover case and the turn-up flange of the packing member. Thus, this annular void may serve as a flow path for water drainage. Cleaning water, if penetrated into the cover case, may be then guided by the annular void to flow below the driver unit and then flow out through between the flange of the cover case and the center base substrate. In this manner, cleaning water that possibly penetrated into the driver unit may be unlikely to stay in the driver unit for too long.

2] In one embodiment of the technology disclosed herein, the blocking protrusion is annularly formed circumferentially along the opening on the outer circumferential surface of the center base substrate.

According to this embodiment, the packing member interposed between the flanges of the unit case and of the cover case may be successfully protected from the high-pressure cleaning water during cleaning throughout the whole circumference of the flange opening.

3] In a preferred embodiment of the technology disclosed herein, the packing members are each in the form of a case having an opening, and the packing members are each held between the unit case and the cover case.

According to this embodiment, any possible void between the unit case and the cover case covering the unit case may be entirely filled with the packing member. Thus, bacteria propagation may be unlikely to occur between the unit case and the cover case.

4] In other embodiments of the technology disclosed herein, the packing member covers an outer circumferential surface of the unit case fitted into the packing member through the opening thereof, and the cover case covers an outer circumferential surface of the packing member fitted into the cover case through the opening thereof.

According to these embodiments, the unit case is fitted into the case-like packing member, and the packing member is then fitted into the cover case. Thus, the cabinet may be so structured that three members of substantially the same shape that differ in size; cover case, packing member and unit case, are sequentially put together in a nesting manner.

5] In one embodiment of the technology disclosed herein, the packing members each have a turn-up flange on an outer circumferential portion of the opening thereof, and the turn-up flanges are each allowed to externally fit to the flange of the unit case.

According to these embodiments, the turn-up flange of the packing member is externally fitted to the flange of the unit case. This may improve waterproofness between the unit case and the packing member and may further secure fitting of the packing member to the unit case, eliminating the risk of any displacement.

In other embodiments of the technology disclosed herein, one of an engaging portion or a coupling portion is provided in an upper part of the opening of the unit case and in an upper part of the opening of the center base substrate, the engaging portion being a portion at which an inclined surface of the unit case and an inclined surface of the center base substrate are engageable with each other, the coupling portion being a portion at which the unit case and the center base substrate are allowed to couple to each other with a fastening member.

Further, the other one of the engaging portion or the coupling portion is provided in a lower part of the opening of the unit case and in a lower portion of the opening of the center base substrate, and the inclined surface of the unit case and the inclined surface of the center base substrate are securely engageable with each other using the fastening member at the coupling portion.

According to these embodiments, the unit case and the center base substrate are fastened to each other with the fastening member at the coupling portions provided in the opening's upper or lower part of the openings of the unit case and of the center base substrate, so that the inclined surfaces are securely engageable with each other at the engaging portions provided in the opening's upper or lower parts. Thus, the driver unit and the center base substrate may be successfully coupled firmly to each other. In this instance, the coupling portion may be formed in either one of the opening's upper or lower part, which may reduce the number of fastening positions.

### EFFECTS OF THE INVENTION

Thus, the technology disclosed herein may enable excellent waterproofness against high-pressure cleaning water during the cleaning operation and may also effectively prevent bacteria propagation, promising a higher level of hygiene

### BRIEF DESCRIPTION OF THE DRAWINGS

Fig. 1 is a schematic, longitudinal front view of a combination weighing apparatus according to an embodiment of the technology disclosed herein.
Fig. 2 is a perspective view of a center base substrate.
Fig. 3 is a perspective view of a driver unit for feeding hopper.
Fig. 4 is a perspective view of a driver unit for weighing hopper.
Fig. 5 is a perspective view from the right side of a feeding hopper attached to a driver unit.
Fig. 6 is a perspective view from the left side of the feeding hopper attached to the driver unit.
Fig. 7 is a perspective view from the right side of a weighing hopper attached to a driver unit.
Fig. 8 is a perspective view from the left side of the weighing hopper attached to the driver unit.
Fig. 9 is an exploded perspective view of a cabinet of the feeding hopper's driver unit.
Fig. 10 is a longitudinal lateral view of the feeding hopper's driver unit.
Fig. 11 is an enlarged, exploded longitudinal view in cross section of a main portion.
Fig. 12 is an enlarged, longitudinal view in cross section of the mounted main portion.
Fig. 13 is an exploded perspective view of upper cabinets of the weighing hopper's driver unit.
Fig. 14 is a longitudinal lateral view of a driver unit for weighing hopper.
Fig. 15 is a longitudinal lateral view in part of the weighing hopper's driver unit.
Fig. 16 is a longitudinal view in cross section of a waterproof structure enlarged in part.

### DESCRIPTION OF EMBODIMENTS

Embodiments of the technology disclosed herein are hereinafter described in detail with reference to the accompanying drawings.

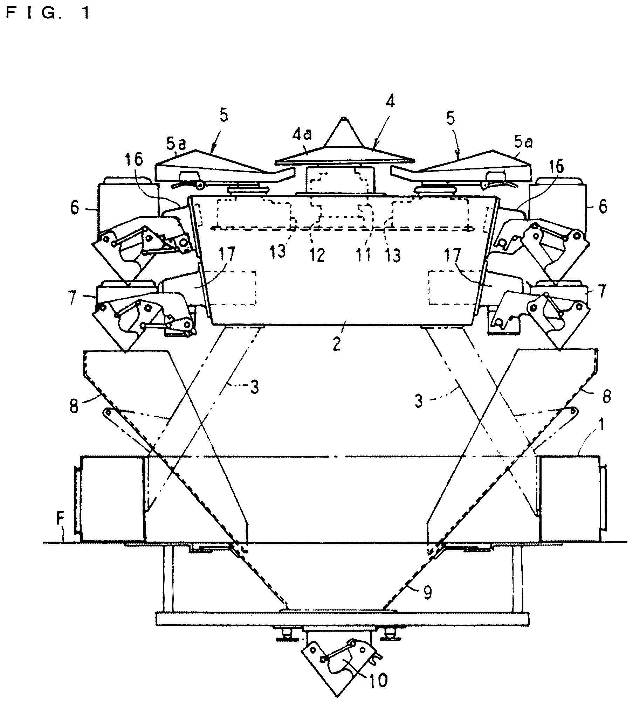

Fig. 1 is a schematic, longitudinal front view of a combination weighing apparatus according to an embodiment of the technology disclosed herein.

The combination weighing apparatus according to this embodiment weighs articles such as foodstuffs, for example, snacks, and then collects and discharges a predetermined amount of such articles at a time. This combination weighing apparatus is installed on a floor surface F of a tower-like frame. This tower-like frame is so structured that allows an operator to climb up and down. The articles within a predetermined range of weights measured and collected by the combination weighing apparatus are thrown downward into an unillustrated packaging apparatus installed beneath the floor surface, where the collected articles are then packed into pouches

A base 1 is installed on the floor surface F. The base 1 has a hollow structure with an opening formed at its center so as to penetrate therethrough. At the center right above the base 1, a hollow center base substrate 2 is supported by a plurality of legs 3. The hollow center base substrate 2 has a polygonal columnar shape relatively small in height.

At an upper position at the center of the center base substrate 2 is disposed a dispersion feeder 4 having a top cone 4a driven to vibrate. This dispersion feeder 4 receives, using the top cone 4a driven to vibrate, articles dropping down from a feeding conveyer illustrated in the drawings. Then, the dispersion feeder 4 radially disperses and transports the received articles. A large number of linear feeders 5 are disposed radially around the dispersion feeder 4. These linear feeders 5 each have a trough 5a driven to vibrate. The linear feeders 5 receive the articles dispersed and transported by the dispersion feeder 4 and linearly transport the received articles outward using the troughs 5a.

A plurality of feeding hoppers 6 and weighing hoppers 7 are disposed on the outer circumferential wall of the center base substrate 2. The feeding hoppers 6 each temporarily retain and then discharge the articles transported from the linear feeder 5. The weighing hoppers 7 each receive the articles discharged from the feeding hopper 6 and measure the weight of the received articles. The combination weighing apparatus is thus equipped with multiple sets of these feeders and hoppers each including the linear feeder 5, feeding hopper 6 and weighing hopper 7.

A controller installed in the center base substrate 2, not illustrated in the drawings, controls the components and devices of this apparatus. The controller also executes combinatorial computations based on the weight values of the articles measured by the weighing hoppers 7 to select a combination(s) of the weighing hoppers 7 containing the articles of a weight that stays within a predetermined range of weights. The combinatorial computations select, from various combinations of the weight values of the articles in the weighing hoppers 7, an optimal combination of hoppers containing the articles of a weight equal to a total target weight or most approximate to another target weight within a range of predetermined range of weights greater than or equal to the total target weight.

The controller discharges the articles from the weighing hoppers 7 selected as an optimal combination of hoppers.

A collection chute 8 is disposed below the weighing hoppers 7. The collection chute 8 receives the articles discharged from the weighing hoppers 7 selected as an optimal combination of hoppers and then guides the received articles to drop downward toward the apparatus center . A collection funnel 9 and a collection hopper 10 are disposed at the center down below the collection chute 8. The collection funnel 9 collects the articles dropping downward along the collection chute 8 to the apparatus center. The collection hopper 10 temporarily retains the collected articles and is opened to throw out the articles based on a discharge command transmitted from the packaging apparatus.

A vibration mechanism 11 having a driver shaft 11a is installed at the center inward of the center base substrate 2. The top cone 4a of the dispersion feeder 4 is detachably coupled to the driver shaft 11a and is thereby driven to vibrate. The vibration mechanism 11 is mounted to and supported by a weight detector 12. Based on weight-related information detected by this detector, a feeding conveyer, not illustrated in the drawings, is driven to operate to allow the articles of a weight within a predetermined range of weights to constantly stay on the dispersion feeder 4.

In the center base substrate 2, a large number of vibration mechanisms 13 are disposed around the vibration mechanism 11. The vibration mechanisms 13 each have a vibration head 13a sticking out of the base's upper surface, and troughs 5a of the linear feeders 5 are detachably coupled to the vibration heads 13a and thereby vibrated.

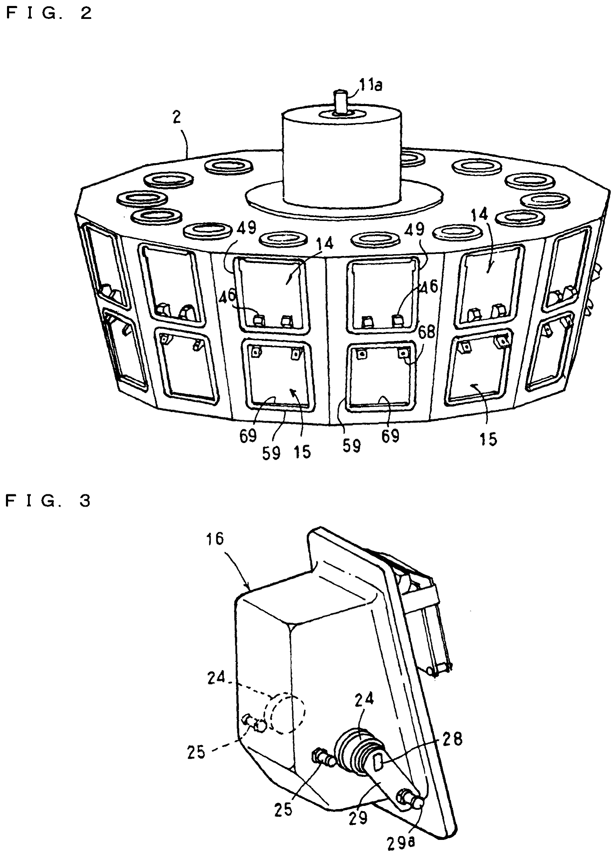

As illustrated in Fig. 2, openings 14 and 15 are formed in upper and lower two stages on the outer circumferential portion of the center base substrate 2. A large number of driver units are mounted to these openings 14 and 15. Driver units 16 are securely mounted to the upper openings 14. The driver units 16 open and close the gates of the feeding hoppers 6. Driver units 17 each having a weight detector are securely mounted to the lower openings 15. The driver units 17 open and close the gates of the weighing hoppers 7. The feeding hoppers 6 are removably attached to the driver units 16, and the weighing hoppers 7 are removably attached to the driver units 17.

Next, the feeding hopper 6 and the weighing hopper 7 and how to attach these hoppers are hereinafter described. For the purpose of illustration, the "center side" refers to a direction toward the core of the center base substrate 2, and the "back side" refers to a direction away from the center base substrate 2.

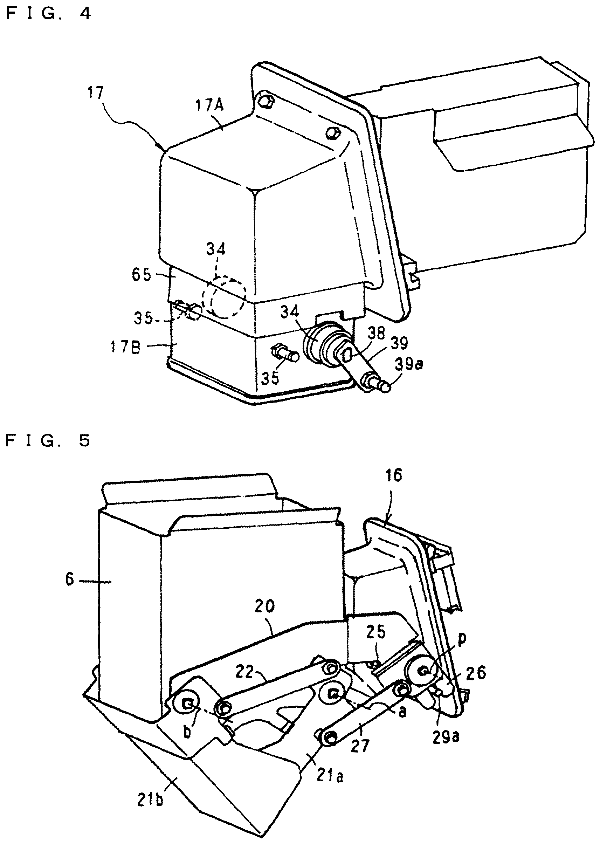

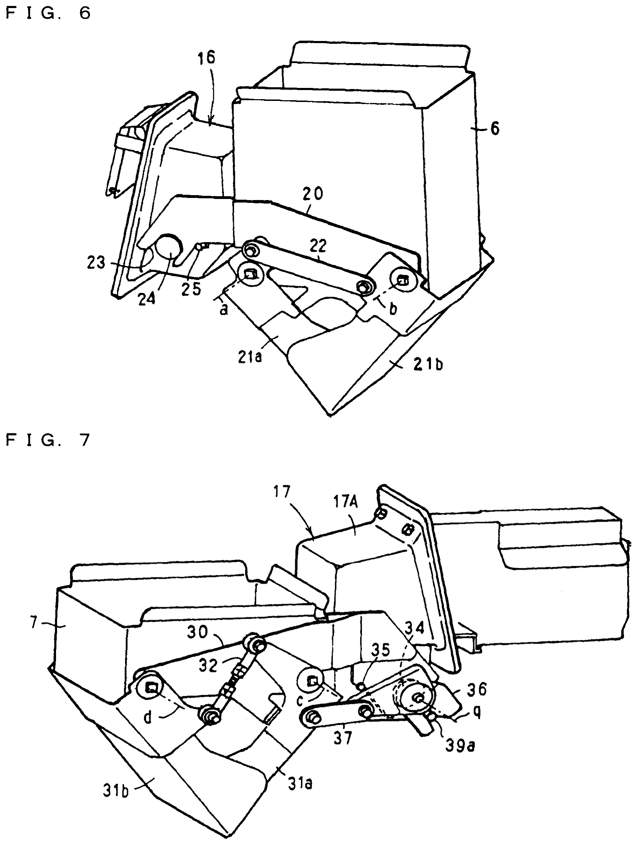

Fig. 3 is a perspective view of a driver unit 16 for feeding hopper. This driver unit drives the gate of the feeding hopper 6 to open and close. Fig. 4 is a perspective view of a driver unit 17 for weighing hopper. This driver unit drives the gate of the weighing hopper 7 to open and close. Fig. 5 is a perspective view, from one side of the lateral direction (right side), of the feeding hopper 6 attached to the driver unit 16. Fig. 6 is a perspective view, from the other side of the lateral direction (left side), of the feeding hopper 6 attached to the driver unit 16.

As illustrated in Figs. 5 and 6, a pair of brackets 20 are securely welded to outer lateral surfaces on both sides of the feeding hopper 6. These brackets 20 are extending toward the center side. Inner gates 21a and an outer gate 21b of the feeding hopper 6 are fitted to these brackets 20 in a manner that these gates are rotatable around fulcrums "a" and "b". The inner and outer gates 21a and 21b are coupled to each other with an interconnection linkage 22 in an interlocking manner. In response to the inner gates 21a being opened and closed, the outer gate 21b is correspondingly rotated to open and close.

Recesses 23 are formed downward at ends of the bracket 20 extending toward the center side. These recesses 23 are engaged from the upper side with bosses 24 protruding from the outer lateral surfaces on both sides of the driver unit 16. Further, inner corners of the brackets 20 are mounted to and engaged with support pins 25 protruding from the outer lateral surfaces on both sides of the driver unit 16. Thus, the whole feeding hopper 6 may be immovably supported, keeping a certain position, by the driver unit 16.

An operation arm 26 is attached to one of the brackets 20 illustrated in Fig. 5 in a manner that this operation arm is rotatable around a fulcrum "p". This operation arm 26 and the inner gate 21a are coupled to each other in an interlocking manner through an operation linkage 27. In response to the operation arm 27 being rotated back and forth, the gates 21a and 21b are correspondingly rotated to open and close.

On one outer lateral side of the driver unit 16 is a driver shaft 28 protruding from one of the bosses 24, as illustrated in Fig. 3. A driver arm 29 is coupled to the driver shaft 28 and is rotatable by this driver shaft. A drier pin 29a is attached to an edge of the driver arm 29, and one free end of the operation arm 26 is engaged from the upper side with this driver pin 29a.

By rotating the driver arm 29 back and forth through a predetermined angle, the inner and outer gates 21a and 21b of the feeding hopper 6 are driven to open and close.

The structural features of the weighing hopper 7 and how to attach this weighing hopper are basically similar to what has been described in reference to the feeding hopper 6.

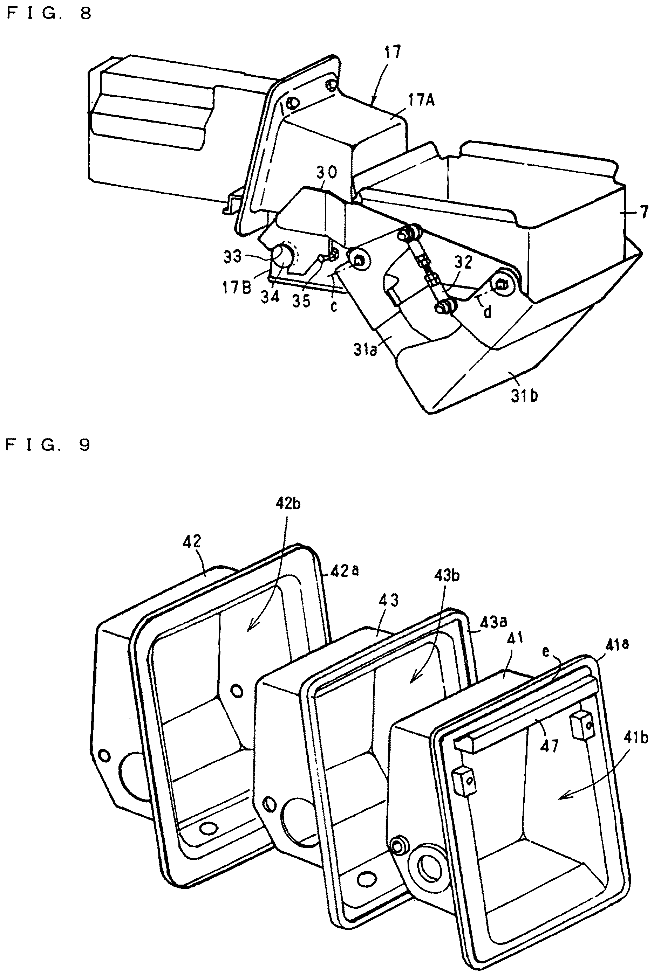

Fig. 7 is a perspective view, from one side of the lateral direction (right side), of the weighing hopper 7 attached to the driver unit 17. Fig. 8 is a perspective view, from the other side of the lateral direction (left side), of the weighing hopper 7 attached to the driver unit 17.

The driver unit 17 for weighing hopper has an upper unit 17A and a lower unit 17b, as illustrated in Fig. 4. The upper unit 17a contains a weight sensor. The lower unit 17B drives the gate of the weighing hopper 7 to open and close.

As illustrated in Figs. 7 and 8, a pair of brackets 30 are securely welded to the outer lateral surfaces on both sides of the weighing hopper 7. These brackets are extending toward the center side. Inner gates 31a and an outer gate 31b are attached to these brackets 30 in a manner that these gates are rotatable around fulcrums "c" and "d". The inner and outer gates 31a and 31b are coupled to each other with an interconnection linkage 32 in an interlocking manner. In response to the inner gates 31a being opened and closed, the outer gate 31b is correspondingly rotated to open and close.

Recesses 33 are formed downward at ends of the bracket 30 extending toward the center side. These recesses 33 are engaged from the upper side with bosses 34 protruding from the outer lateral surfaces on both sides of the driver unit 17B. Further, inner corners of the brackets 30 are mounted to and engaged with support pins 35 protruding from the outer lateral surfaces on both sides of the lower unit 17B. The whole weighing hopper 7 may be immovably supported by the lower unit 17B at four points; two on the right and two on the left, and thus allowed to keep a certain position and direction.

An operation arm 36 is mounted to the bracket 30 on the right side illustrated in Fig. 7 in a manner that this operation arm is rotatable around a fulcrum "q". This operation arm 36 and the inner gate 31a are coupled to each other with an operation linkage 37 in an interlocking manner. In response to the operation arm 37 being rotated back and forth, the gates 31a and 31b are correspondingly rotated to open and close.

On one outer lateral side of the lower unit 17B is a driver shaft 38 protruding from one of the bosses 34, as illustrated in Fig. 4. A driver arm 39 is coupled to the driver shaft 38 and is rotatable by this driver shaft 38. A driver pin 39a is attached to an edge of the driver arm 39, and one free end of the operation arm 36 is engaged from the upper side with this driver pin 39a.

By thus rotating the driver arm 39 back and forth through a predetermined angle, the inner and outer gates 31a and 31b of the weighing hopper 7 are driven to open and close.

The combination weighing apparatus used to handle and weigh foodstuffs is provided with a conventionally known "product zone" which refers to a region in direct contact with articles to be weighed or a surrounding region immediately above the articles. The devices and/or components of the apparatus in this product zone need to cleaned whenever necessary to remove any residues of the articles handled in the apparatus.

To serve this purpose, the top cone 4a of the dispersion feeder 4, troughs 5a of the linear feeders 5, feeding hoppers 6 and weighing hoppers 7 are all removed from the apparatus and separately cleaned, and the center base substrate 2 exposed after the removal of these components is then washed with high-pressure water.

The center base substrate 2 and the driver units 16 and 17 are embedded with various electric devices and controllers, which makes it necessary to prevent cleaning water from penetrating into these units.

The protruding portion of the driver shaft 11a, which the top cone 4a of the dispersion feeder 4 is attachable to and detachable from, is embedded with a known waterproof structure using a seal ring. The protruding portion of the vibration head 13a, which the trough 5a of the linear feeder 5 is attachable to and detachable from, is embedded with a known waterproof structure using a bellows.

This embodiment may successfully provide effective waterproof structures for the driver units 16 and 17, details of which are described below with reference to the accompanying drawings.

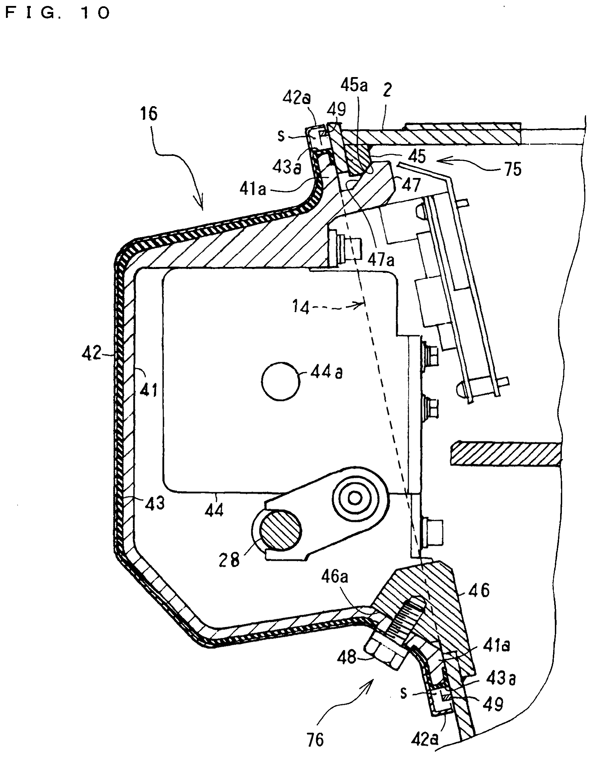

] Fig. 9 is an exploded perspective view of a cabinet of the driver unit 16 that drives the feeding hopper 6. Fig. 10 is a longitudinal lateral view of the driver unit 16 coupled to the center base substrate 2.

The cabinet of the driver unit 16 is equipped with a metallic unit case 41 and a metallic cover case 42. The unit case 41 has a large opening 41b directed toward the center side, i.e., toward the center base substrate 2. The cover case 42 externally covers the whole unit case 41.

The unit case 41 according to this embodiment is a die-cast case allowed to form into any optional shape and made of a die-cast metal, for example, an aluminum metal(s).

The cover case 42 constituting the cabinet's outer circumferential surface is made of a rust-proof metal, for example, brass or stainless steel which may be hardly corrodible. In this embodiment, a stainless steel plate is used to form the cover case 42.

A void or gap may be likely to form between the die-cast unit case 41 and the cover case 42 obtained by metal-sheet working and serving to cover this unit case 41.

As illustrated in Fig. 1, the cabinet of the driver unit 16 is located in a product zone in the upper direction of the collection chute 8 that guides articles, such as foodstuffs, discharged from the weighing hoppers 7 and drops them downward. This cabinet needs to be cleaned at times with cleaning water. This may often involve the risk of inviting the cleaning water to penetrate into between the unit case 41 and the cover case 42, leading to resulting bacteria propagation. Thus, an effective preventive measure(s) should desirably be developed and employed against these risks.

To meet this need, this embodiment provides a packing member 43 that covers the outer circumferential surface of the unit case 41. This packing member 43 is held between the unit case 41 and the cover case 42. The packing member 43 includes an elastic sealing material such as a synthetic rubber and has a case-like (box-like) shape having an opening at its one end, similarly to the unit case 41 and the cover case 42.

The packing member 43 serves to seal any void or gap formed between the unit case 41 and the cover case 42. This packing member may successfully block cleaning water from penetrating into between these cases and also prevent bacteria propagation in the void or gap.

In the unit case 41, a flange 41a is formed along the whole circumference of the opening 41b directed forward. This flange 41a is adapted to abut the outer circumference of the center base substrate 2. The packing member 43 that covers the unit case 41 also has a large opening 43b directed forward. As illustrated in Fig. 10, a turn-up flange 43a is formed along the whole circumference of the opening 43b. The turn-up flange 43a is externally fitted to the outer circumferential portion of the flange 41a of the unit case 41. The cover case 42 that covers the packing member 43 also has an opening 42b directed forward. A flange 42a is formed along the whole circumference of the opening 42b. This flange 42a serves to cover the turn-up flange 43a of the packing member 43 from the outer circumferential side.

As illustrated in Fig. 10, the flange 42a of the cover case 42 is formed more outward than the outer circumference of the turn-up flange 42a, and an annular gap "s" is circumferentially formed between the flange 42a and the turn-up flange 43a.

When the driver unit 16 is coupled to the center base substrate 2, the front edge of the flange 42a of the cover case 42 is slightly spaced away from the outer circumferential surface of the center base substrate 2. This may prevent any contact of the front edge of the flange 42a with the outer circumferential surface of the center base substrate 2 before the front end surface of the flange 41a of the unit case 41 contacts this outer circumferential surface.

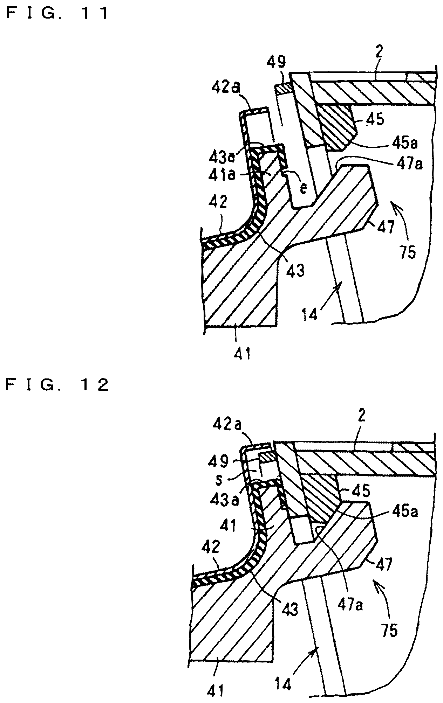

As illustrated in Fig. 9, a stepped portion "e" for packing attachment is formed along the whole circumference of the front end surface of the flange 41a. The depth of this stepped portion "e" is slightly smaller than the thickness of the front portion of the flange 41a. As illustrated in Fig. 11, the front portion of the flange 43a externally fitted to the flange 41a is slightly protruding farther than the front end surface of the flange 41a. The amount of this protrusion serves as a margin for elastic fastening when the unit case 41 is mounted to the center base substrate 2. As illustrated in Fig. 12, the front portion of the turn-up flange 43a serves as a packing member when the driver unit 16 is mounted to the center base substrate 2. This may ensure waterproofness in the opening 14 of the center base substrate 2 and in the opening 41b of the unit case 41 of the driver unit 16.

In recent years, there is an increasing demand from the industrially relevant market for higher temperature degrees and higher pressures in cleaning operations. Specifically, waterproofness is desirably satisfied that complies with IP69K defined in DIN 40050 PART9, German Industrial Standards. According to IP69K, hot water at 80°C is discharged through nozzles of a required shape, 10 to 15 cm away under the pressure of 80 to 100 bar at the rate of 14 to 16 L/min.

If such high-pressure cleaning water as defined in IP69K is directly blown against an elastic sealing member made of, for example, rubber, the elastic sealing member may possibly break, failing to serve the purpose of waterproofness.

In this embodiment, blocking protrusions 49 made of stainless steel may be securely welded annularly to the outer circumferential surface of the center base substrate 2 around each opening 14. In this instance, the bocking protrusion 49 is adapted to fit into an annular gap "s" formed between the turn-up flange 43a of the packing member 43 and the flange 42a of the cover case 42. This blocking protrusion 49 protrudes into between the turn-up flange 42a of the packing member 43 and the flange 42a of the cover case 42 in the gap "s".

During cleaning, high-pressure cleaning water may be blown into the flange 42a through between the outer circumferential surface of the center base substrate 2 and the front edge of the flange 42a. Yet, the blocking protrusion 49 may successfully prevent direct contact of the cleaning water with the turn-up flange 43a. Thus, the rubber-made, turn-up flange 43a may be unlikely to break under the impact of the high-pressure cleaning water.

Thus, the degree of waterproofness required in IP69K may be successfully feasible.

Cleaning water, after penetrating into the flange 42 through between the outer circumferential surface of the center base substrate 2 and the front edge of the flange 42a, is guided toward below the driver unit 16 through the annular gap "s" formed between the flange 42a and the turn-up flange 43a. Then, the cleaning water is discharged outside through between the outer circumferential surface of the center base substrate 2 and the front edge of the flange 42a.

The blocking protrusions 49 may preferably be formed annularly along the whole circumference of the opening 14. Yet, the blocking protrusion 49 may be formed in a partly broken annular shape, for example, in the shape of an upper half alone of the annular shape.

Though any detailed structure is not illustrated in the drawings, the unit case 41 is embedded with a stepping motor 44 serving as a gate open/close actuator, as illustrated in Fig. 10. The stepping motor 44 has a motor output shaft 44a and is laterally disposed. The gate opening/closing driver arm 29 is coupled to the driver shaft 28, and this driver shaft 28 and the motor output shaft 44a are coupled to each other in an interlocking manner through a linkage mechanism.

In the cabinet of the driver unit 16 illustrated in Fig. 9, the packing member 43 is fitted in through the opening 42b of the cover case 42, and the unit case 41 is fitted in through the opening 43b of the packing member 43. The cover case 42, packing member 43 and unit case 41 have similar outer shapes and smaller outer dimensions in the mentioned order. Thus, the cabinet may be so structured that three members of substantially the same shape that differ in size; cover case, packing member and unit case, are sequentially put together in a nesting manner.

The whole outer circumferential surface of the unit case 41 is covered with the case-like packing member 43, and the whole outer circumferential surface of the packing member 43 is covered with the cover case 42.

To assemble these components into the cabinet of the driver unit 16, an adhesive is applied to the inner side of the turn-up flange 43a of the packing member 43, and the adhesive-applied, turn-up flange 43a is fitted to the flange 41a of the unit case 41 to form the unit case 41 and the packing member 43 into an integral unit. Then, an adhesive is applied to a suitable part of the outer surface of the packing member 43, for example, the rear outer surface of the turn-up flange 43a, and the cover case 42 is then fitted to the packing member 43. The cabinet of the driver unit 16 is thus allowed to have a three-layer structure in which these components are integral with one another.

Next, how to mount the driver unit 16 to the center base substrate 2 is hereinafter described.

As illustrated in Fig. 10, a support member 45 having an inclined surface 45a is securely welded to an inner upper edge of the opening 14 of the center base substrate 2. Paired attachment blocks 46 each having a inclined surface 46a directed downward are securely welded to a lower edge of the opening 14. A coupling protrusion 47 is formed in an upper part of the opening 41b of the unit case 41 directed forward. This coupling protrusion 47 has an inclined surface 47a and protrudes obliquely upward.

Two inclined surfaces; inclined surface 45a of the support member 45 in the upper part of the center base substrate 2, and inclined surface 47a of the coupling protrusion 47 in the upper part of the unit case 41, engage with each other, constituting an engaging portion 75. In lower parts of the center base substrate 2 and of the unit case 41, the unit case 41 and the downward inclined surface 46a of the attachment block 46 securely engage with each other using a fastening member; bolts 48, constituting a coupling portion 76.

When the driver unit 16 is mounted to the center base substrate 2, the coupling protrusion 47 is first engaged with the support member 45 from the lower side, and the driver unit 16 is pushed against the outer circumferential surface of the center base substrate 2. Then, a lower part of the unit case 41 is securely fastened into the attachment blocks 46 with two bolts 48.

When the lower portion of the unit case 41 is fastened with bolts to the inclined surface 46a of the attachment block 46 and thereby pressed under pressure against this inclined surface, the driver unit 16 is pushed upward. As a result, the inclined surface 47a of the coupling protrusion 47 is pushed hard against and engaged with the inclined surface 45a of the support member 45 under the wedge effect. Thus, the driver unit 16 may be firmly and securely fastened without wobbling by simply having the lower portion of this unit fastened with bolts at two points.

The driver unit 16 may be thus readily mounted to the center base substrate 2 by simply fastening the lower portion of the unit case 41 at two positions into the attachment block 46 using two bolts 48.

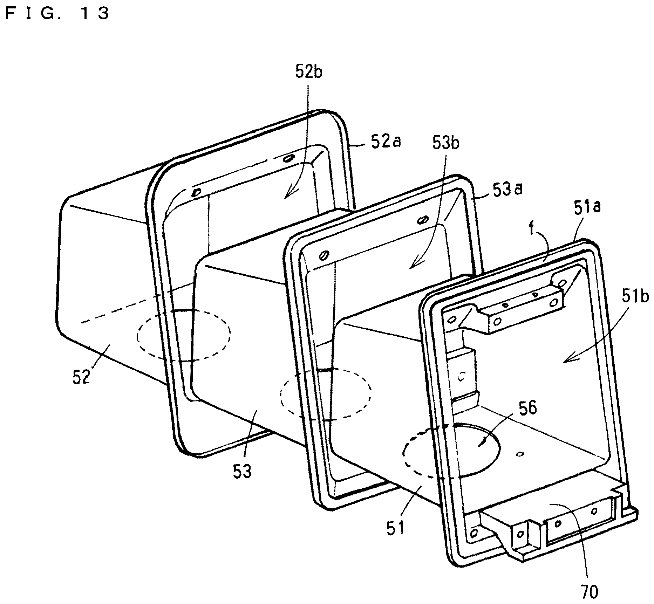

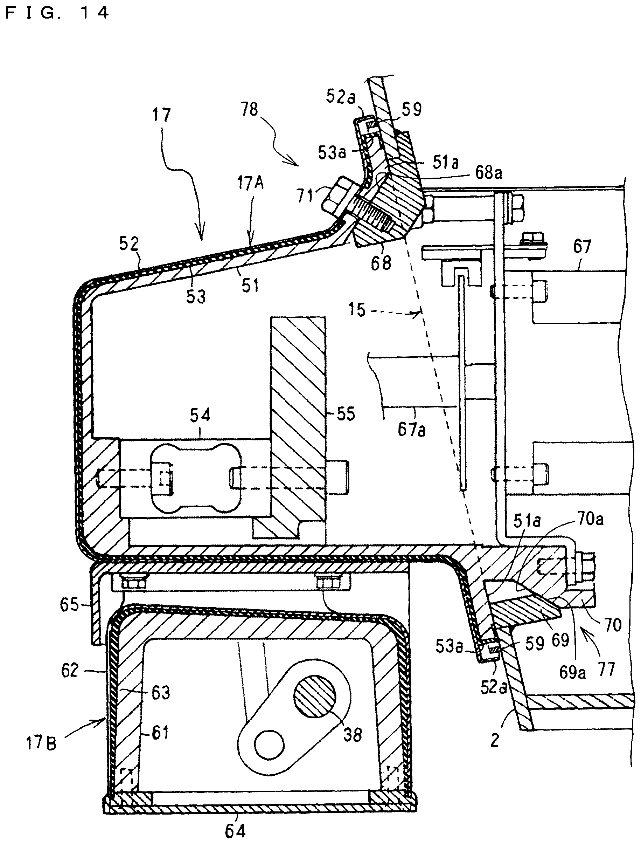

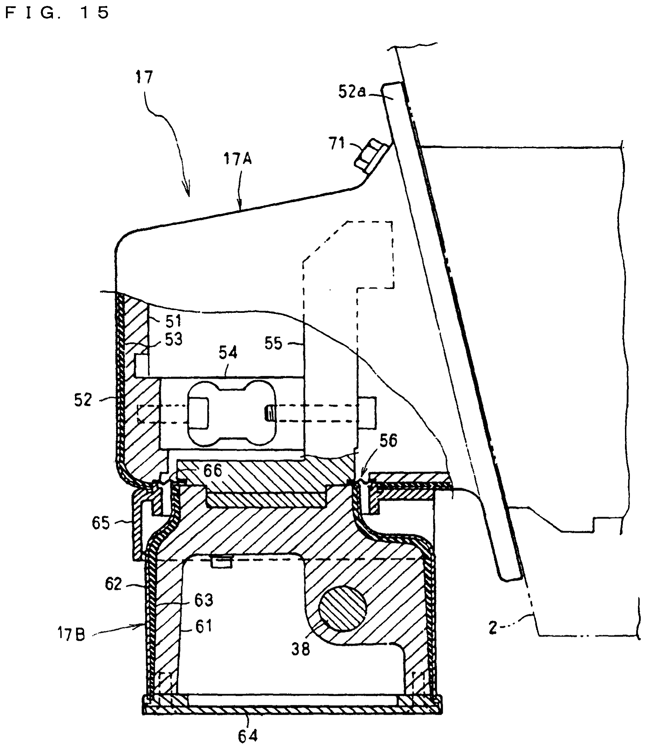

Fig. 13 is an exploded perspective view of the cabinet in part of the driver unit 17 of the weighing hopper 7. Figs. 14 and 15 are longitudinal lateral views of the driver unit 17 coupled to the center base substrate 2.

As illustrated in Fig. 13, the cabinet of the upper unit 17A of the driver unit 17 includes a unit case 51, a cover case 52 that covers the whole unit case 51, and a packing member 53. The unit case 51 is made of a die-cast metal such as an aluminum alloy. The unit case 51 has a large opening 51b directed forward, i.e., toward the center base substrate 2. The cover case 52 is made of a rust-proof, stainless steel plate. The cover case 52 externally covers the unit case 51. The packing member 53 is made of an elastic sealing material and is held in whole between the unit case 51 and the cover case 52.

The packing member 53 that covers the whole circumferential surface of the unit case 51 may serve to seal any void or gap between the unit case 51 and the cover case 52, preventing penetration of cleaning water and possible bacteria propagation in the void or gap.

Along the whole circumference of the opening 51b directed forward of the unit case 51 is formed a flange 51a adapted to abut the outer circumferential surface of the center base substrate 2. The packing member 53 that covers the unit case 51 also has a large opening 53b directed forward, and a turn-up flange 53a to be externally fitted to the outer circumferential part of the flange 51a of the unit case 51 is formed along the whole circumference of the opening 53b. Further, the cover case 52 that covers the packing material 53 has, likewise, a large opening 52b directed forward, and a flange 52a that covers the turn-up flange 53a of the packing member 53 is formed along the whole circumference of the opening 52b.

Though not illustrated in an enlarged view, the unit case 51 has an annular stepped portion "f", similarly to the driver unit 16 of the weighing hopper 6. This stepped portion is formed on the front end surface of the flange 51a of the unit case 51 along its whole circumference . The turn-up flange 53a of the packing member 53 is externally fitted to this stepped portion "f". The front end part of the turn-up flange 53a thus externally fitted to the stepped portion "f" protrudes slightly farther than the front end surface of the flange 51a. The amount of this protrusion of the front end surface of the turn-up flange 53a serves as a margin for elastic fastening when the driver unit 17 is mounted to the center base substrate 2. This may ensure waterproofness in the opening 15 of the center base substrate 2 and in the opening of the upper unit 17A.

Like the driver unit 16 of the feeding hopper 6, the flange 52a of the cover case 52 is disposed more outward than the outer circumference of the turn-up flange 53a, as illustrated in Fig. 14. An annular gap "t" is formed between the flange 52a and the turnup-flange 53a. This annular gap serves as a flow path for drainage of cleaning water possibly penetrating into the flange.

Annular blocking protrusions 59 adapted to advance into the gap "t" are each securely welded to the outer circumferential surface of the center base substrate 2 so as to surround the opening 15.

During cleaning using high-pressure cleaning water, the blocking protrusion 59 may block the high-pressure cleaning water blown into the flange 52a through between the outer circumferential surface of the center base substrate 2 and the front edge of the flange 52a. This may prevent direct contact of the high-pressure cleaning water with the turn-up flange 53a, avoiding the risk of any damage by the high-pressure cleaning water to the turn-up flange 53a made of, for example, rubber.

The blocking protrusions 59 may preferably be formed annularly along the whole circumference of the opening 15. Yet, the blocking protrusion 49 may be formed in a partly broken annular shape, for example, in the shape of an upper half of the annular shape

In the upper unit 17A, a load cell 54; weight sensor, is securely held in a cantilever manner, and a support block 55 is coupled to a free end of the load cell 54 for load application. A lower end of the support block 55 is facing an opening 56 formed on the lower surface of the upper unit 17A, and the lower unit 17 is supportably coupled to a lower end of the support block 55, as illustrated in Fig. 15.

The weight of the whole lower unit 17B mounted with the weighing hopper 7 is applied to the free end of the load cell 54 through the support block 55. A distortion meter is used to electrically detect any distortion of the load cell 54. Thus, the weight of articles in the weighing hopper 7 is measured.

As illustrated in Figs. 14 and 15, the cabinet of the lower unit 17B has a three-layer structure including a unit case 61, a cover case 62, and a packing member 63. The unit case 61 is an aluminum die-cast member having an opening at its bottom. The cover case 62 covers the unit case 61 and is made of stainless steel. The packing member 63 is made of an elastic sealing material held between the unit case 61 and the cover case 62. The opening at the bottom of this cabinet is covered with a bottom cover 64.

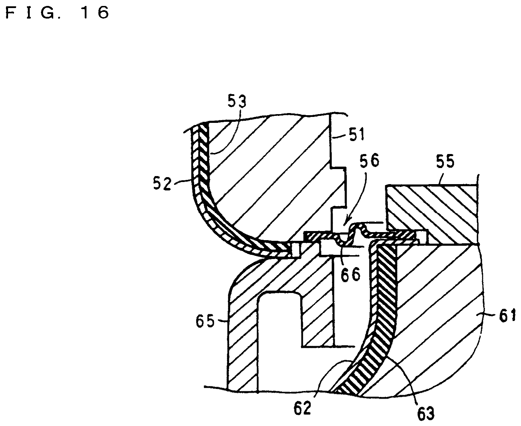

A waterproof cover 65 is securely coupled to the lower surface of the upper unit 17A to cover the lower opening 56. As illustrated in Fig. 16, a ring-like bellows 66 is used to seal an annular gap between the waterproof cover 65 and an upper end of the lower unit 17B. This may ensure waterproofness in the opening 56 of the lower surface of the upper unit 17A, while allowing vertical displacements of the lower unit 17B under load changes.

As illustrated in Fig. 14, the upper unit 17B is mounted with a servo motor 67 having an output shaft 67a. The servo motor 67 serves as an actuator for gate opening and closing and protrudes forward to a large extent. The output shaft 67a is coupled in an interlocking manner to the driver shaft 38 of the driver arm 39 for gate opening and closing of the weighing hopper 7 through a linkage mechanism not illustrated in the drawings.

Like the driver unit 16, the cabinet of the driver unit 17 has a three-layer structure in which the respective members are integrally bonded with an adhesive applied to their suitable positions.

Next, how to mount the driver unit 17 to the center base substrate 2 is hereinafter described.

As illustrated in Fig. 14, a pair of attachment blocks 68 each having an upward inclined surface 68a are securely welded to an upper edge of the opening 15 of the center base substrate 2. A support member 69 is securely welded to a lower edge of the opening 15. A coupling protrusion 70 is formed in a lower part of the inward opening of the unit case 51. This coupling protrusion 70 has an inclined surface 70a protruding toward the center base substrate 2.

In lower parts of the center base substrate 2 and of the unit case 51 is formed an engaging portion 77. In this engaging portion 77, an inclined surface 69a of the support member 69 of the center base substrate 2 and an inclined surface 70a of the coupling protrusion 70 of the unit case 51 are engaged with each other. In upper parts of the center base substrate 2 and of the unit case 51 is formed a coupling portion 78. In this coupling portion 78, the upward inclined surfaces 68a of the attachment blocks 68 and the unit case 51 are fastened and coupled to each other with bolts 71 used as a fastening member.

When the driver unit 17 is mounted to the center base substrate 2, first, the coupling protrusion 70 is engaged from the upper side with the support member 69. Then, the driver unit 17 is pushed against the outer circumferential surface of the center base substrate 2, and an upper part of the unit case 51 is securely fastened into the attachment blocks 68 with two bolts 71.

An upper part of the unit case 51 is pressed against the upward inclined surfaces 68a of the attachment blocks 68 and then fastened with bolts. As a result, the driver unit 17 is pushed down, and the inclined surface 70a of the coupling protrusion 70 is firmly engaged with the inclined surface 69a of the support member 69 under the wedge effect. Thus, the driver unit 17, by simply having its upper part fastened with bolts, may be firmly and securely fastened without wobbling.

The driver unit 17 of the weighing hopper 7 has a relatively large weight because this driver unit is mounted with such devices as the load cell 54 and the servo motor 67; actuator for gate opening and closing. This heavy driver unit 17 is placed on and engaged with the lower engaging portion 77, which allows the weight of the driver unit 17 to be temporarily supported by the center base substrate 2. Then, this driver unit is fastened in the upper coupling portion 78 with bolts. Thus, it is no longer necessary to, for example, fasten the drive unit using bolts, with the driver unit 17 being lifted upward, and mounting of the driver unit 17 may be accordingly facilitated.

In this embodiment, the driver unit 16 of the feeding hopper 6 and the driver unit 17 of the weighing hopper 7 are installed in the center base substrate 2 as separate members independent from each other. In case any problem, for example, malfunction or breakdown, occurs in the gate driver system of the feeding hopper 6 or weighing hopper 7 or in the weight measurer system of the weighing hopper 7, one of the driver units alone may need to be removed to deal with the problem and then repaired as desired. This may facilitate maintenance work, as compared to the feeding hopper 6 and the weighing hopper 7 being loaded in one driver unit

### OTHER EMBODIMENTS

The technology disclosed herein is feasible as described below.

1] In the embodiment described earlier, the driver unit 16 of the feeding hopper 6 and the driver unit 17 of the weighing hopper are installed in the center base substrate 2 as separate members independent from each other. However, the feeding hopper 6 and the weighing hopper 7 may be attached to the same driver unit.
2] The combination weighing apparatus of the earlier embodiment is equipped with multiple sets of weighing units each including a linear feeder, a feeding hopper and a weighing hopper, in which these weighing units are disposed circumferentially around the dispersion feeder. In other embodiments, the technology disclosed herein may be applicable to a horizontal type combination weighing apparatus in which multiple sets of weighing units each including a linear feeder, a feeding hopper and a weighing hopper are horizontally arranged in a row next to one another and coupled to a laterally long center base substrate.
3] In the embodiment described earlier, the turn-up flanges 43a and 53a of the packing members 42 and 52 serving to fill any gap between the unit cases 41 and 51 and the cover cases 42 and 52 are used as packing members to be held between the mounting end surfaces of the unit cases 41 and 51 and the outer circumferential surface of the center base substrate 2. Instead, a specially prepared packing member may be held between the mounting end surface of the unit case 41, 51 and the outer circumferential surface of the center base substrate 2 to ensure waterproofness at each unit mounting position.
4] In the embodiment described earlier, the packing members 42 and 52 are used to entirely fill any gap between the unit cases 41 and 51 and the cover cases 42 and 52. Instead, an annular packing member may be held between the flange 41a, 51a of the unit case 41, 51 and the flange 42a, 52a of the cover case 42, 52 alone to ensure waterproofness at a position of possible water entry of any gap between the unit case 41, 51 and the cover case 42, 52.

### REFERENCE SIGNS LIST

- 2: center base substrate
- 6: feeding hopper
- 7: weighing hopper
- 14: opening
- 15: opening
- 16: driver unit
- 17: driver unit
- 41: unit case
- 41a: flange
- 42: cover case
- 42a: flange
- 43: packing member
- 43a: turn-up flange
- 51: unit case
- 51a: flange
- 52: cover case
- 52a: flange
- 53: packing member
- 53a: turn-up flange
- 49: blocking protrusion
- 59: blocking protrusion
- s: gap
- t: gap

## Claims

1. A waterproof structure for a combination weighing apparatus, the combination weighing apparatus, comprising:
a center base substrate having a plurality of openings;
a plurality of hoppers; and
a plurality of driver units each having a cabinet, the plurality of hoppers each being attachable to a respective one of the plurality of driver units,
the cabinets of the plurality of driver units being mountable to the plurality of openings of the center base substrate in a manner that the plurality of openings are closable with the cabinets,
the plurality of driver units being allowed to open and close the gates of the plurality of hoppers,
the cabinets of the plurality of driver units each comprising a unit case, and a cover case,
the unit cases each including a metallic material and having an opening formed correspondingly to a respective one of the openings of the center base substrate,
the cover cases each including a metallic material and having an opening, the cover cases serving to cover the unit cases,
the cover cases each comprising a flange that covers the flange of the unit case, with a void being present therebetween, from an outer circumferential side of the flange, the flanges of the cover cases being annularly disposed circumferentially along the openings,
packing members each being interposed between the flange of the unit case and the flange of the cover case,
the center base substrate comprising blocking protrusions on an outer circumferential surface thereof, the blocking protrusions each protruding into between the packing member and the flange of the cover case in the void.

2. The waterproof structure for the combination weighing apparatus according to claim 2, wherein
the blocking protrusions are annularly formed circumferentially along the openings on the outer circumferential surface of the center base substrate.

3. The waterproof structure for the combination weighing apparatus according to claim 1, wherein
the packing members are each in the form of a case having an opening, and
the packing members are each held between the unit case and the cover case.

4. The waterproof structure for the combination weighing apparatus according to claim 3, wherein
the packing members each cover an outer circumferential surface of the unit case fitted into the packing member through the opening thereof, and
the cover cases each cover an outer circumferential surface of the packing member fitted into the cover case through the opening thereof.

5. The waterproof structure for the combination weighing apparatus according to claim 4, wherein
the packing members each have a turn-up flange on an outer circumferential portion of the opening thereof, and
the turn-up flanges are each allowed to externally fit to the flange of the unit case.

6. The waterproof structure for the combination weighing apparatus according to claim 3, wherein
one of an engaging portion or a coupling portion is provided in an upper part of the opening of the unit case and in an upper part of the opening of the center base substrate,
the engaging portion being a portion at which an inclined surface of the unit case and an inclined surface of the center base substrate are engageable with each other, the coupling portion being a portion at which the unit case and the center base substrate are allowed to couple to each other with a fastening member,
the other one of the engaging portion or the coupling portion is provided in a lower part of the opening of the unit case and in a lower portion of the opening of the center base substrate, and
the inclined surface of the unit case and the inclined surface of the center base substrate are securely engageable with each other using the fastening member at the coupling portion.
